Europäisches Patentamt

European Patent Office

Office européen des brevets

(11) Publication number: **0 425 315 A2**

# EUROPEAN PATENT APPLICATION

(21) Application number: 90311787.7

(51) Int. Cl.⁵: **G06F 15/72**

(22) Date of filing: 26.10.90

(30) Priority: 26.10.89 GB 8924074
25.05.90 GB 9011745

(43) Date of publication of application:
02.05.91 Bulletin 91/18

(84) Designated Contracting States:
DE FR IT NL

(71) Applicant: THE GENERAL ELECTRIC
COMPANY, p.l.c.
1 Stanhope Gate
London W1A 1EH(GB)

(72) Inventor: Stark, Jaroslav
70, Weymouth Avenue
London, W5 4SB(GB)

(74) Representative: George, Sidney Arthur
The General Electric Company p.l.c. GEC
Patent Department(Wembley Office) Hirst
Research Centre East Lane
Wembley Middlesex, HA9 7PP(GB)

(54) Image generation and processing.

(57) In a process for generating images using the mathematical framework of fractals implemented as a neural network architecture, processing for each pixel of the image is carried out by a respective processing element (10,11). All of the elements operate in parallel, thereby achieving very fast processing. The generated image is determined by the strengths of the connections between the processing elements. The processing elements may be individual elements or may be implemented in a computer. The image to be generated is preferably encoded as an Iterated Function System.

FIG.1

# IMAGE GENERATION AND PROCESSING

This invention relates to image processing, and particularly to image generation and image comparison using the mathematical framework of fractals.

It has previously been observed by a number of workers, for example B. Mandelbrot, 1982, "The Fractal Geometry of Nature", W.H. Freeman, that a wide variety of images can be considered as fractals, ie. a set such that two standard definitions of its dimension give different answers.

This offers the possibility of storing, generating and processing images in entirely new ways. A particularly useful class of fractals for such purposes is given by so-called "Iterated Function Systems" (IFS), see, for example, M.F. Barnsley, 1988 "Fractals Everywhere", Academic Press and J. Hutchinson, 1981, "Fractals and Self-Similarity", Indiana U.J. Math., 30, 713-747. As an example, Barnsley et al. have demonstrated image compression ratios of up to $10^4$:1 using such techniques; see M.F. Barnsley and A.D. Sloan, 1988 "A Better Way to Compress Images", Byte, 13, 215-223.

However, such schemes suffer from the disadvantage that prohibitively large amounts of computation are required, either to encode an image as an IFS or, conversely, to generate the image corresponding to a given IFS.

It is an object of the invention to provide an improved method and apparatus for image generation. The invention may also provide improved image comparison.

According to the invention there is provided an image generation process using the mathematical framework of fractals implemented as a neural network architecture, in which processing for each pixel of the image is carried out by a respective processing element, the processing elements operating in parallel; and in which the generated image is determined by the strengths of the connections between the processing elements.

Embodiments of the invention will now be described, by way of example, with reference to the accompanying drawings, in which

Figure 1 is a schematic block diagram illustrating the interconnection of pixel processing elements for two pixels of an image, and

Figure 2 is a schematic block diagram of a network architecture at one pixel for comparing images.

In image generation it is desired to plot an image corresponding to an IFS on to a computer screen. For simplicity it will be assumed that the screen is made up of square pixels and that the horizontal and vertical resolutions of the screen are identical. If necessary, generalisation to include rectangular screens and pixels of other aspect ratios can be readily effected.

If N is the resolution of the screen, the pixels can be labelled by the pair (i, j) for $1 \leq i,j \leq$ (N. Let $\mu_{ij}$ denote the "intensity" of the (i,j)th pixel. If the display is a "grey-scale" screen, the "intensity" would be the grey level. In the case of a colour display, "intensity" could denote either the entry into a colour table or the intensity of one of the primary colours.

An IFS F is determined by maps $\{f_1,---,f_q\}$ and probabilities $\{p_1,----, p_q\}$. Here each $f_\alpha$ is a map of the plane to itself and $P_\alpha$ is a number where $0<p_\alpha<1$ such that the sum of the $P_\alpha$'s is 1. In Barnsley's original formulation of the theory, each f must contract distances, but this is not necessary in the present invention provided that the IFS corresponds to a unique image, i.e. in mathematical terms it has a unique invariant probability measure.

Given $\{f_1, ---- , f_q\}$ and $\{p_1,----pg_q,\}$ the corresponding image is generated iteratively as follows:

The process is started with an arbitrary choice of initial intensity $\mu_{ij}$ such that the sum of $\mu_{ij}$ over all pixels is not zero. By appropriate scaling it is asumed that this sum is equal to 1. Then, given $\mu_{ij}$ for all pixels at time t, its value $\mu_{ij}^{(t+1)}$ at time t+1 is calculated by:

$$\mu_{ij}^{(t+1)} = \sum_{i'=1}^{N} \sum_{j'=1}^{N} \omega_{iji'j'} \, \mu_{i'j'}^{(t)} \qquad (1)$$

The weights $\omega_{iji'j'}$ are computed from $\{f_1,..., f_q\}$ and $\{p_1, ..., P_q$ as follows:

$$\omega_{iji'j'} = \sum_{\alpha=1}^{q} p_\alpha \chi(\alpha,i,j,i',j') \qquad (2)$$

where $\chi(\alpha\ i,j,\ i',j')$ is 1 if the map $f_\alpha$ sends the pixel $(i'j')$ "close" to the pixel $(i,j)$ and 0 otherwise. If the maps $\{f_1,...., f_q\}$ are scaled such that each $f_\alpha$ maps the square $\{(x,y): 0\leq x, y\leq N$ into itself, then one possible definition of $\chi(\alpha,i,j,i',j')$, is

$$\chi(\alpha,j,j,i'j') = \begin{cases} 1 & \text{if } f_\alpha(i', j') \in B_{ij} \\ 0 & \text{otherwise} \end{cases} \qquad (3)$$

where $B_{ij}$ is the square $\{(x,y) : (i-1)\leq x<i, (j-1)\leq y<j\}$

This implementation therefore corresponds to the top right-hand corner of the pixel $(i',j')$ being sent anywhere into the square occupied by the pixel $(i, j)$. Many other scalings and choices of rounding are possible. It should be noted that, at most, q of the weights $\omega_{iji'j'}$ are non-zero for a given $(i',j')$.

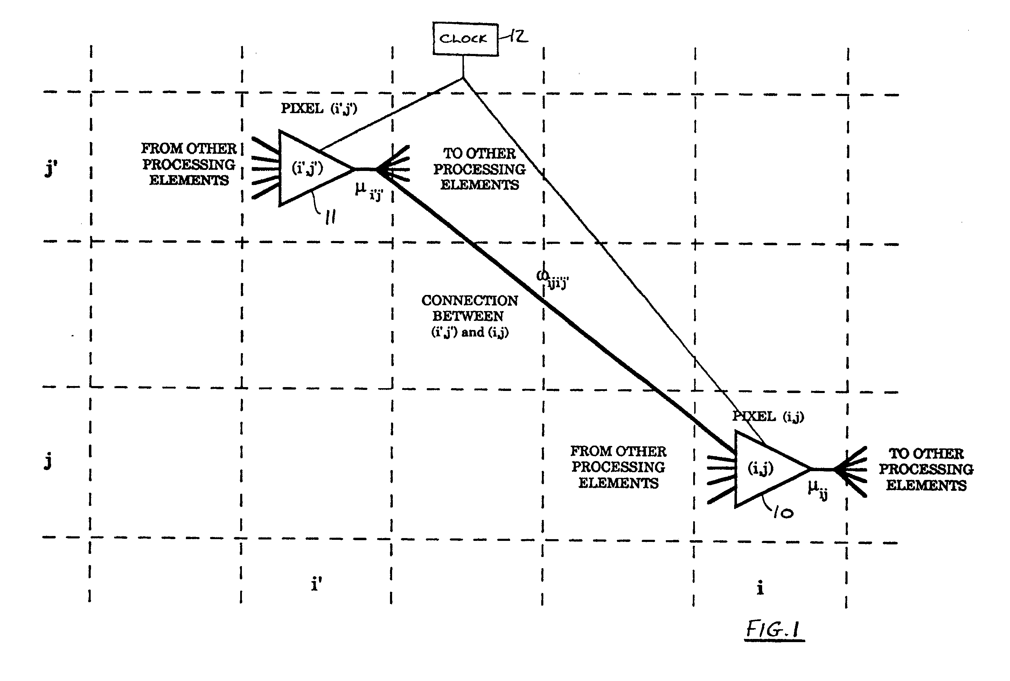

Figure 1 of the drawings illustrates, schematically, columns $i$ and $i'$ and rows $j$ and $j'$ of pixels of the image, and processing elements 10 and 11 used in carrying out the generation process. The functions may be performed by a dedicated simple processing element for each pixel $(i,j)$, all operating in parallel to achieve fast processing, or by a more general computer, operating in parallel mode. Dedicated processors may use electronic, optical or other suitable technology. In the case of a general computer, one processor in the computer would perform the calculations required for one or more pixel processing units.

Each pixel processor must be able to store the value $\mu_{ij}$ and update it at each time step, in accordance with equation (1) above. The time steps are determined by a clock pulse generator 12 associated with all of the processor elements. The weights $\omega_{iji'j'}$ are associated with the "strength" of the connection between the pixel processor $(i',j')$ and the pixel processor $(i,j)$ and need to be calculated only once for each image. This calculation may be effected by the pixel processing elements or by other suitable means. The weights $\omega_{iji'j'}$ can be stored by the pixel processor $(i'j')$ or the pixel processor $(i,j)$ or independently of each of those processors. The pixel processor $(i'j')$ must be able to communicate the value $\mu_{i'j'}$ to the pixel processor $(i,j)$ at each time step, and the value may, if necessary, be multiplied by the weight $\omega_{iji'j'}$. As iteration proceeds, the values $\mu_{ij}^{(t)}$ will converge to a limiting value which is the desired image. Iteration is therefore continued until the value $\mu_{ij}^{(t)}$ ceases to change by an appreciable amount, as determined by the desired accuracy. The values are then passed to the display device. If the maps $f_\alpha$ are all contracting, it is possible to give a realistic upper limit to the time required for the processing.

As an extension of the invention, computation of the Hutchinson metric (see "Fractals and Self-Similarity" mentioned above) can be effected. The Hutchinson metric gives a natural measure of the discrepancy between two fractal images obtained from Iterated Function Systems. Its main application is in encoding a given image $\mu^*$ as an IFS.

This encoding process is basically a problem of optimization to find an IFS $F^*$ amongst some set of feasible IFSs F which minimizes some measure $\Delta(\mu_F,\mu^*)$ of the discrepancy between $\mu_F$ and $\mu^*$, where $\mu_F$ denotes the image corresponding to the IFS F.

Since there is no known explicit formula for $F^*$ in terms of $\mu^*$, the only feasible approach is an iterative one. A sequence $F_m$ of IFSs is therefore generated such that $\mu_{Fm}$ converges to a minimum of $\Delta$. The choice of $\Delta$ is crucial in determining the efficiency of the search process.

In this embodiment of the invention, there are provided a choice of $\Delta$ and a machine architecture which allows an extremely rapid evaluation of $\Delta$. In particular it is assumed that

$$\Delta(\mu_F,\mu^*) = \Delta_H (M_F \mu^* \mu^*) \qquad (4)$$

where $\Delta H$ is the Hutchinson metric and $M_F$ is the Markov operator corresponding to the IFS F. If $\mu$ and $\gamma$ are images on a computer screen, then $\Delta H$ is defined by

$$\Delta H \,(\mu,\nu) \;=\; \min \; \sum_{i=1}^{N} \; \sum_{j=1}^{N} \; \varphi_{ij}\,(\mu_{ij} - \nu_{ij}) \qquad (5)$$

where $\Phi$ is a function which assigns a value $\Phi_{ij}$ to each pixel (i,j) which satisfies the conditions.

$|\Phi_{ij} - \Phi_{i'j'}| \leq |i - i'| + |j - j'|$, for all values where $0 \leq i,j,i',j' < N$    (5′)

and the minimum in equation (5) is taken over all possible functions $\Phi$ which satisfy the conditions (5′). The Markov operator $M_F$ in equation (4) is defined by

$$[M_F \,\mu]_{ij} \;=\; \sum_{i'=1}^{N} \; \sum_{j'=1}^{N} \; \omega_{iji'j'}\mu_{i'j'} \qquad (6)$$

for any image $\mu$. It should be noted that this corresponds to one iteration of equation (1) which can be carried out rapidly, as described above.

A great advantage of the comparison given by equation (4) is that In order to compare images $\mu_F$ and $\mu^*$ It is not necessary to generate the image $\mu_F$, but only to carry out one step of the iteration given by equation (1).

It is then necessary to effect efficient calculation of equation (5). This is equivalent to the linear programming problem:

$$\text{minimise} \; \sum_{i=1}^{N} \; \sum_{j=1}^{N} \; \varphi_{ij}\,(\mu_{ij} - \nu_{ij})$$

subject to the following constraints:

$\Phi_{ij} - \Phi_{i+1,j} \leq 1$ for $1 \leq i < N$ and $1 \leq j \leq N$

$\Phi_{ij} - \Phi_{i-1,j} \leq 1$ for $1 \leq i < N$ and $1 \leq j \leq N$

$\Phi_{ij} - \Phi_{i,j+1} \leq 1$ for $1 \leq i < N$ and $1 \leq j \leq N$

$\Phi_{ij} - \Phi_{i,j-1,j} \leq 1$ for $1 \leq i < N$ and $1 \leq j \leq N$

This can be solved using a neural net approach. One possible architecture is derived from a general algorithm of Tank and Hopfield (see O.K. Tank and J.J. Hopfield, 1986, "Simple Neural Optimization Networks; an A/D Converter, Signal Decision Circuit and a Linear Programming Circuit", IEEE Trans. Cir. Sys. 33, 87-95.

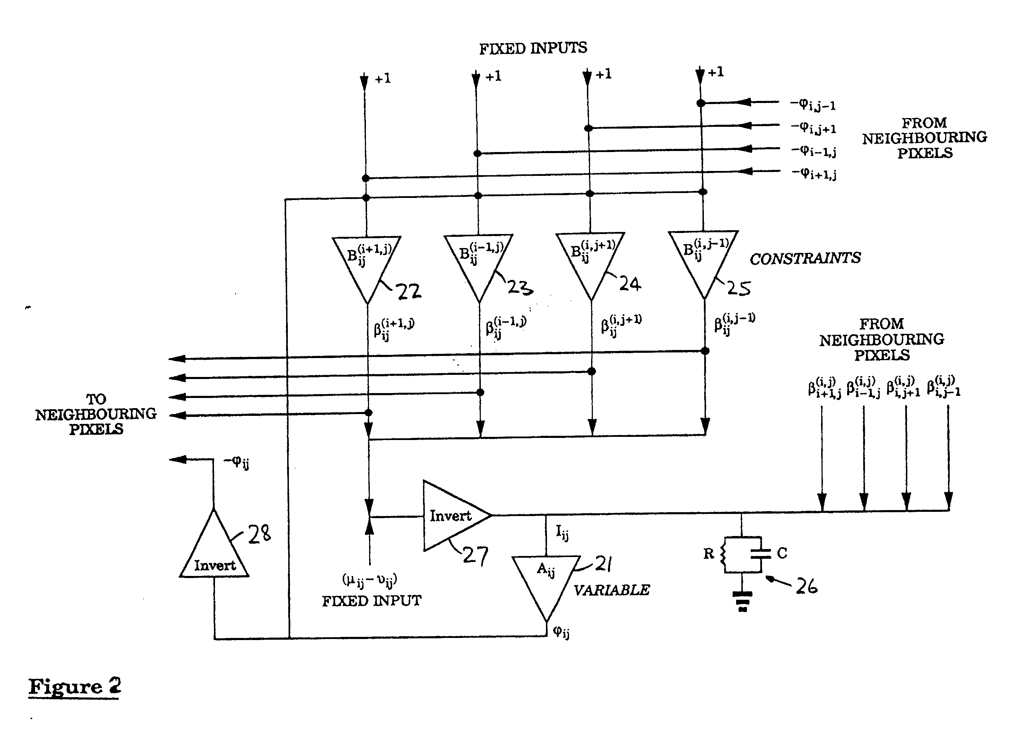

A suitable analogue network for effecting the calculation is shown in Figure 2 of the drawings. This comprises, for each pixel, a linear amplifier 21 for the variable $\Phi_{ij}$ and a non-linear amplifier 22-25 for each of the above restraints, referred to as $B_{ij}^{(i+1,j)}$, $B_{ij}^{(i-1,j)}$, $B_{ij}^{(i,j+1)}$, $B_{ij}^{(i,j+1)}$ and $B_{ij}^{(i,j-1)}$, respectively.

The output of the amplifier 21 is $\Phi_{ij}$, and the outputs of the amplifiers 22-25 are denoted as $B_{ij}^{(i'j')}$. The input to the amplifier 21 is a current $\varphi_{ij}$ of magnitude $-(\mu_{ij} - \nu_{ij}) - (\beta_{ij}^{(i+1,j)} + \beta_{ij}^{(i-1,j)} + \beta_{ij}^{(i,j+1)} + \beta_{ij}^{(i,j-1)} + \beta_{i+1,j}^{(i,j)} + \beta_{i-1,j}^{(i,j)} + \beta_{i,j+1}^{(i,j)} + \beta_{i,j-1}^{(i,j)}$ for $1 < i,j < N$, with appropriate modification for i,j $\epsilon$ {1, N.} This is integrated by an RC circuit 26 to give

$$C \,\frac{dI_{ij}}{dt} \;=\; \varphi_{ij} - \frac{I_{ij}}{R}$$

The output is given by $\Phi_{ij} = K I_{ij}$ for some constant K. The input to each of the amplifiers 22-25 is a measure of the degree to which the constraint is satisfied. Hence, for example, the input $J_{ij}^{(i+1,j)}$ to the amplifier 22 is $J_{ij}^{(i+1,j)} = (\Phi_{i+1,j} - \Phi_{ij}^{+} 1)$. The amplifiers 22-25 are assumed to have a much faster response than the amplifier 21, and the outputs from the amplifiers 22-25 are therefore simply a function $g(J_{ij}^{(i'j')})$ of the input. Tank and Hopfield take $g(z) = 0$, $z \geq 0$, $g(z) = -K'z$, $z < 0$, where g is the output of the amplifiers 22-25 and z is the input to the amplifiers. However, given the nature of semiconductor devices, it would be

4

more appropriate to take g(z) = - K'expz, z<0. This network will minimize the "energy" function.

$$E(\mu,\nu) = \sum_{i=1}^{N} \sum_{j=1}^{N} \phi_{ij}(\mu_{ij} - \nu_{ij}) + \sum_{i,i'=1}^{N} \sum_{j,j'=1}^{N} G(J_{ij}^{(i,j')}) + \sum_{i=1}^{N} \sum_{j=1}^{N} \frac{\phi_{ij}}{2RK}$$

where G is the integral of g, so G(z) = 0, z≥0, G(z) = $\frac{1}{2}$ K'z², z<0 With suitable choices of K, K' and R, this gives an arbitrarily accurate approximation to ΔH(μ,ν)

The term ($\mu_{ij}$ -$\nu_{ij}$) is fed, as a fixed input, to an inverter 27, together with the outputs of the amplifiers 22-25. The output of the amplifier 21 is fed to an inverter 28, which produces the output -$\Phi_{ij}$for feeding to the circuitry for the neighbouring pixel.

The linear programming problem could alternatively be solved using an implementation of any other neural network architecture for linear optimization. Furthermore, the architecture could be embodied directly as electronic or other circuitry or could be simulated on a digital or analog computer. As all of the connections in the network described above are "nearest neighbour", the architecture could be simulated efficiently on an SIMD processor, such as the DAP processor of ICL.

**Claims**

1. An image generation process using the mathematical framework of fractals implemented as a neural network architecture, characterised in that processing for each pixel (i,j) of the image is carried out by a respective processing element (10,11), the processing elements operating in parallel; and in which the generated image is determined by the strengths of the connections between the processing elements.

2. A process as claimed in Claim 1, characterised in that the processing elements (10,11) are implemented in a computer.

3. A process as claimed in Claim 1 or Claim 2, characterised in that each processing element (10,11) stores an intensity value for the respective pixel (i,j) and updates said value at each of a number of successive time steps.

4. A process as claimed in Claim 3, characterised in that each intensity value corresponds to a grey level of an image to be generated.

5. A process a- claimed in Claim 3, characterised in that each intensity value corresponds to the intensity of one of the primary colours of a colour image to be generated.

6. A process as claimed in any preceding claim, characterised in that the strengths of the connections for all processing elements (10,11) are calculated once for each different image.

7. A process as claimed in Claim 6, characterised in that the calculation of the strengths is effected by the processing elements (10,11).

8. A process as claimed in Claim 6, characterised in that the calculation of the strengths is effected by means external to said processing elements.

9. A process as claimed in any preceding claim, characterised in that an image to be generated is encoded as an Iterated Function System (IFS).

10. A process as claimed in Claim 9, characterised in that the encoding is effected by iteratively minimising the difference between the intensities for two fractal images.

11. A process as claimed in Claim 9 or Claim 10, characterised in that a first image corresponding to an IFS is compared to a predetermined second image without generating said first image.

12. A process as claimed in Claim 10 or Claim 11, characterised in that the minimising is effected by a neural net.

13. A process as claimed in Claim 10 or Claim 11, characterised in that the minimising is effected by a computer.

FIG.1

EP 0 425 315 A2

FIXED INPUTS

+1    +1    +1    +1

$-\varphi_{i,j-1}$
$-\varphi_{i,j+1}$
$-\varphi_{i-1,j}$
$-\varphi_{i+1,j}$

FROM NEIGHBOURING PIXELS

$B_{ij}^{(i+1,j)}$    $B_{ij}^{(i-1,j)}$    $B_{ij}^{(i,j+1)}$    $B_{ij}^{(i,j-1)}$    *CONSTRAINTS*

22    23    24    25

$\beta_{ij}^{(i+1,j)}$    $\beta_{ij}^{(i-1,j)}$    $\beta_{ij}^{(i,j+1)}$    $\beta_{ij}^{(i,j-1)}$

FROM NEIGHBOURING PIXELS

$\beta_{i+1,j}^{(i,j)}$  $\beta_{i-1,j}^{(i,j)}$  $\beta_{i,j+1}^{(i,j)}$  $\beta_{i,j-1}^{(i,j)}$

TO NEIGHBOURING PIXELS

$-\varphi_{ij}$

28

Invert

Invert    27

$I_{ij}$

$A_{ij}$    21    *VARIABLE*

$(\mu_{ij} - \upsilon_{ij})$
FIXED INPUT

$\varphi_{ij}$

R    C

26

**Figure 2**